# DEMANDE DE BREVET EUROPEEN

(11) **EP 0 695 076 A1**
(43) Date de publication de la demande: **31.01.1996**
(21) Numéro de dépôt: 95401710.9
(22) Date de dépôt: 19.07.1995
(51) Int. Cl.: H04N 1/21

(54) **Procédé de stockage et d'obtention de copies de documents à distance et système correspondant**

(30) Priorité: 20.07.1994 FR 9408992
(71) Demandeur: Serero, moise, F-75015 Paris (FR)
(72) Inventeur: Serero, moise, F-75015 Paris (FR)
(74) Mandataire: Casalonga, Axel

(57) **Abrégé**

Le procédé de l'invention consiste à numériser un document par un coffre de transmission (2) pour son stockage à distance dans un centre serveur (1), et à obtenir une copie du document stocké via un coffre de transmission ou un télécopieur (20). Des moyens de sécurité (code d'identification de l'utilisateur et cryptage/codage des signaux de transmission) sont prévus afin de préserver la fiabilité et la confidencialité dans la transmission des documents.

Avantage principal : archivage des documents personnels importants et obtention des documents archivés (carte d'identité, permis de conduire, passeport, contrats d'assurance, etc.) rapidement à n'importe quel endroit du monde.

## Description

La présente invention concerne le domaine de stockage de documents permettant aux utilisateurs d'obtenir à distance des copies des documents stockés.

Depuis toujours, l'écrit a été et reste le moyen le plus sûr dans toutes les opérations de vente, d'achat, de justification, ou toute autre opération de la vie courante, et ceci aussi bien à l'égard d'un tiers qu'à l'égard des administrations.

L'importance capitale de certains documents nous conduit pratiquement à ne jamais nous en séparer (carte d'identité, permis de conduire, etc.). Si certains d'entre eux ne sont utilisés que de manière occasionnelle, ils n'en demeurent pas moins importants et indispensables au moment où nous en avons besoin.

Or il est impensable qu'une personne puisse, de manière permanente, avoir en sa possession la totalité des documents dont il peut avoir besoin.

L'objet de la présente invention est de fournir un système permettant à n'importe quel individu abonné au système se trouvant dans n'importe quel endroit du monde d'obtenir une copie des documents dont il a besoin d'urgence (notamment en cas de perte ou de vol de ses papiers quand il voyage à l'étranger ou en cas de nécessité d'un document important au cours d'une négociation à l'étranger).

L'invention permet de constituer un réseau accessible par des abonnés pour qu'ils puissent archiver dans une banque de données leurs documents personnels et d'en obtenir copie de manière sûre.

Le système de l'invention comprend une partie centrale, dite centre serveur, chargée de stocker et de gérer l'ensemble des documents des abonnés au système, au moins une unité périphérique de transmission permettant de numériser et d'expédier électroniquement les documents au centre serveur et de recevoir et d'imprimer les documents demandés par les abonnés au centre serveur, et éventuellement des modules décodeurs pouvant être adaptés à des télécopieurs classiques afin d'augmenter la sécurité de l'envoi des documents depuis le centre serveur vers ces télécopieurs classiques.

Le procédé de stockage et d'obtention de copies de documents à distance, telles que cartes d'identité, permis de conduire, passeports, contrats d'assurance etc., selon l'invention, consiste essentiellement en deux phases dissociables l'une de l'autre. La première phase est la phase de stockage d'un document dans un centre serveur via une unité de transmission et la seconde phase est la phase d'obtention de copies d'un document stocké dans le centre serveur.

La phase de stockage comprend essentiellement les étapes suivantes: identification de l'utilisateur par son code d'accès au système; numérisation du document en transformant son contenu en données binaires; stockage provisoire du document numérisé dans une mémoire tampon de l'unité de transmission; attribution d'une référence au document numérisé; envoi depuis l'unité de transmission du contenu de la mémoire tampon d'un signal, binaire crypté, à un centre serveur qui, après décryptage du signal, stocke le document numérisé sous sa référence; et restitution par l'unité de transmission à l'utilisateur du document initial avec sa référence de stockage.

La phase d'obtention de copie d'un document stocké comprend essentiellement les étapes suivantes : identification de l'utilisateur par son code d'accès; listage des références des documents stockés dans le centre serveur au nom de l'utilisateur; émission d'un signal binaire par le centre serveur représentant le document dont la référence est sélectionnée par l'utilisateur vers un télécopieur indiqué par l'utilisateur et identifié par le centre serveur; et imprimer sur le télécopieur de réception le document sélectionné par l'utilisateur.

Chaque unité de transmission comprend un moyen de réception du signal et d'impression de documents comme un télécopieur. Le système de cryptage et décryptage entre l'unité de transmission et le serveur central pendant la phase de stockage fonctionne aussi pendant la phase d'obtention de copies par l'unité de transmission, de façon à assurer une sécurité maximum dans la transmission des informations.

Selon l'invention, il est également possible de déclencher la phase d'obtention de copies d'un document stocké dans le centre serveur, par téléphone au moyen duquel l'utilisateur entre en contact avec une messagerie vocale du centre serveur qui après identification de l'utilisateur permet au centre serveur d'expédier un signal binaire représentant le contenu du document sélectionné par l'utilisateur vers une unité de transmission ou vers un télécopieur classique.

Afin d'améliorer la sécurité de transmission, on peut équiper le télécopieur classique de réception d'un module décodeur. Le signal codé émis par le centre serveur reste secret s'il est envoyé par erreur vers un télécopieur qui n'est pas équipé de module décodeur.

L'invention sera mieux comprise à l'étude de la description détaillée d'un mode de réalisation particulier pris à titre nullement limitatif et illustré par les dessins annexés, sur lesquels :

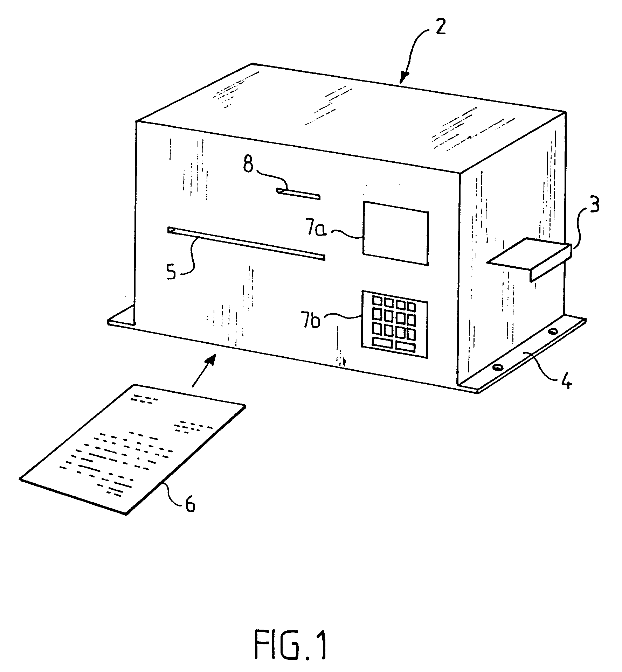

la figure 1 est une vue schématique en perspective d'une unité de transmission selon l'invention,
la figure 2 est un schéma explicatif du fonctionnement de l'unité de transmission de la figure 1, et
la figure 3 est un schéma de fonctionnement du système selon l'invention.

Comme illustré sur les figures, le système de l'invention comprend un centre serveur 1 et une pluralité d'unités de transmission périphériques 2 sous forme de coffres par exemple qui sont installés dans des zones géographiques différentes plus ou moins éloignées du centre serveur 1. Les coffres de transmission 2 peuvent être installés dans une salle des coffres d'une banque, dans un local réservé d'un centre de télécommunication (par exemple la poste) ou dans des cabines téléphoniques aménagées.

Chaque coffre de transmission 2 présente un boîtier sensiblement parallélépipédique comportant des points d'ancrage 3, 4 pour la fixation du coffre sur un support non représenté. La face avant du boîtier du coffre 2 comporte une fente horizontale 5 permettant l'introduction d'un document 6 en vue de sa numérisation et le passage d'une copie de document imprimé dans le coffre 2 d'après un signal provenant du centre serveur 1. Un écran de visualisation 7a, un clavier 7b et une seconde fente 8 destinée à l'introduction d'une carte de paiement sont également prévus sur la face avant du coffre 2.

Pour la phase de stockage du contenu du document 6 dans le centre serveur 1, l'utilisateur introduit d'abord sa carte de paiement non représentée dans la seconde fente 8 et introduit son code d'identification personnel au clavier 7b. Le module principal 9 du coffre permet, lorsque le module de paiement 10 a reçu l'autorisation du centre serveur 1 ou d'un centre de paiement non représenté du système après identification de l'utilisateur, d'activer le module d'acquisition et d'impression 11. L'écran 7a informe alors l'utilisateur qu'il peut introduire le document 6 dans la fente 5 à l'intérieur de laquelle se trouve un mécanisme d'entraînement et de numérisation connu en soi non représenté. Le module d'acquisition et d'impression 11 numérise le contenu du document 6 en données binaires qui sont stockées provisoirement dans une mémoire tampon 12. Le module d'acquisition et d'impression 11 restitue alors le document 6 à l'utilisateur par la fente 5 du coffre 2. Si le document 6 comporte plusieurs feuilles, I'opération précédente peut être répétée autant de fois qu'il y a de feuilles dans le document 6. A la fin de l'opération, le document 6 est entièrement numérisé et stocké dans la mémoire tampon 12. Un module 13 constituant le protocole propriétaire permet d'attribuer au document 6 une référence avec laquelle le document sera archivé au centre serveur 1. L'utilisateur peut décider via le clavier 7b d'envoyer le contenu de la mémoire tampon 12 au centre serveur 1 via un module 14 de modulation et de démodulation (modem) et un réseau téléphonique commuté (RTC) par exemple.

De préférence, un module 15 de cryptage et de décryptage est associé au modem 14 afin d'assurer la sécurité de transmission des données par signaux binaires entre le coffre de transmission 2 et le serveur central 1 qui sera également équipé d'un module de cryptage et décryptage identique. Pour assurer le fonctionnement autonome du coffre de transmission 2, une source électrique d'alimentation 16 y est prévue.

La numérisation du document 6 par le coffre de transmission 2 consiste à transformer le texte contenu sur le document 6 en papier en un ensemble de données binaires sous forme d'un fichier binaire. Les fichiers binaires sont répertoriés, transmis et stockés dans le centre serveur 1.

Chaque utilisateur sera identifié au moyen de sa carte de paiement (bancaire ou téléphonique) disposant d'un code confidentiel. Cela permet non seulement d'identifier l'utilisateur mais également de débiter le compte bancaire de l'utilisateur en fonction de la durée et du type de la prestation demandée.

Il est possible en l'absence d'un coffre de transmission 2 qu'on vient de décrire, d'utiliser un télécopieur classique pour transmettre au centre serveur 1 un document à stocker. Cela nécessite au préalable l'utilisation d'un formulaire permettant d'identifier l'utilisateur, par exemple au moyen d'une messagerie vocale du centre serveur 1. Dans ce cas, ce télécopieur classique émetteur assure la fonction de l'unité de transmission. Afin d'assurer la sécurité du système, on peut exiger que le télécopieur doit être équipé d'un module codeur/décodeur pour que son envoi puisse être accepté par le centre serveur 1.

Pour la phase d'obtention de copies à distance stockées dans le centre serveur, on utilise de préférence un coffre de transmission 2 qui assure le rôle de récepteur. L'utilisateur introduit sa carte de paiement dans la seconde fente 8 du coffre et s'identifie via le clavier 8 en fournissant son code confidentiel. Le centre serveur 1, après avoir identifié l'utilisateur, envoie au coffre de transmission 2 la liste des documents référencés et stockés au nom de l'utilisateur. La liste des références apparaît sur l'écran 7a pour que l'utilisateur puisse sélectionner le ou les documents qu'il souhaite recevoir au moyen du clavier 8. Le module central 9 du coffre de transmission 2 donne alors l'instruction au module d'acquisition et d'impression 11, afin d'imprimer le ou les documents choisis. Le document imprimé sort page par page de l'intérieur vers l'extérieur du coffre de transmission 2 par la fente 5. L'utilisateur reçoit ainsi une copie du document tel que stocké dans le centre serveur 1.

La liaison protégée entre le centre serveur 1 et le coffre de transmission 2 par le module de cryptage et de décryptage 15 permet d'assurer une transmission fiable du document.

L'utilisateur peut également recevoir des documents au moyen d'un télécopieur classique qui est de préférence équipé d'un module décodeur afin d'assurer la confidentialité des informations transmises. Dans ce cas, le centre serveur transmet au télécopieur un signal codé représentant le contenu du document sélectionné par l'utilisateur. Le codage du signal par le centre serveur peut n'être fait qu'après un signal de reconnaissance de la présence du module décodeur sur la ligne du télécopieur. Sinon le message envoyé par le centre serveur n'a pas besoin d'être codé pour être envoyé au télécopieur classique.

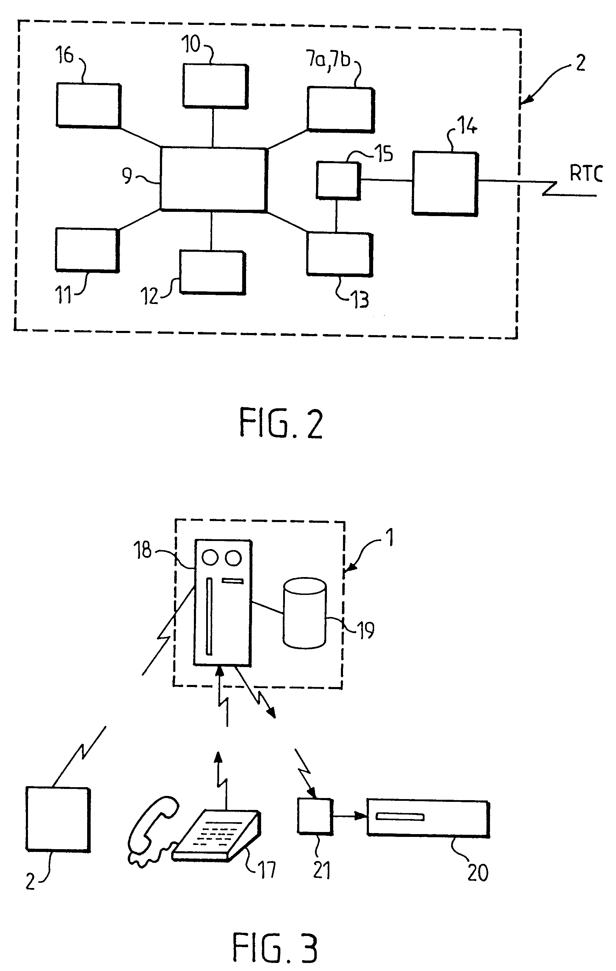

On se réfère à la figure 3 pour décrire l'utilisateur du système pour recevoir une copie d'un document stocké dans le centre serveur 1 sans passer par un coffre de transmission 2. L'utilisateur appelle le centre serveur 1 au moyen d'un téléphone 17. La partie 18 de traitement des données du centre serveur 1 comporte une unité de messagerie vocale permettant de dialoguer avec l'utilisateur au téléphone. Après avoir identifié le code confidentiel de l'utilisateur introduit sur le clavier du téléphone 17, la partie 18 de traitement des données demande à la partie 19 base de données du centre serveur 1 et indique vocalement à l'utilisateur la liste des documents stockés à son nom. L'utilisateur peut alors sélectionner le document voulu au moyen par exemple des touches du téléphone 17 et donner instructions au centre serveur 1 d'envoyer le document à un télécopieur prédéterminé 20. Ce télécopieur 20 reçoit et imprime le document demandé par l'utilisateur.

Comme indiqué précédemment, afin d'assurer la confidentialité des informations transmises, on peut équiper le télécopieur 20 d'un module décodeur 21 par lequel transite le signal envoyé par le centre serveur 1. Si le signal est codé par le centre serveur 1 et si le télécopieur 20 n'est pas équipé du module décodeur 21, les messages reçus par le télécopieur ne seront pas restitués fidèlement pour pouvoir reconstituer le document demandé.

Le système de l'invention peut avoir un champ d'utilisation très répandu dont les utilisateurs peuvent être des personnes physiques ou morales, par exemple des banques, des administrations et organismes de retraite, des sociétés de crédit et organismes de financement, des opérateurs de télécommunication et des compagnies d'assurance.

Dans des endroits où l'utilisateur ne dispose pas d'un coffre de transmission 2 ni d'un télécopieur classique 20, il est possible que l'utilisateur demande par téléphone 17 comme décrit précédemment au centre serveur 1 d'envoyer des documents choisis à un bureau de poste proche de l'utilisateur et équipé d'un télécopieur. La poste pourra alors acheminer rapidement le document reçu vers l'utilisateur.

## Revendications

1. Procédé de stockage et d'obtention de copies de documents à distance, tels que carte d'identité, permis de conduire, passeport, contrat d'assurance etc., caractérisé en ce qu'il consiste en deux phases dissociables l'une de l'autre:
**a)** pour la phase de stockage d'un document (6) via une unité de transmission (2):
- identification de l'utilisateur par son code d'accès,
- numérisation du document en données binaires,
- stockage provisoire du document numérisé dans une mémoire tampon (12),
- attribution d'une référence au document numérisé,
- envoi depuis l'unité de transmission (2) du contenu de la mémoire tampon via un signal binaire crypté, à un centre serveur (1) qui après décryptage du signal stocke le document numérisé sous sa référence,
- restitution par l'unité de transmission à l'utilisateur du document initial avec sa référence de stockage,
**b)** pour la phase d'obtention de copie d'un document stocké dans le centre serveurs (1):
- identification de l'utilisateur par son code d'accès,
- listage des références des documents stockés dans le centre serveur au nom de l'utilisateur,
- émission d'un signal binaire par le centre serveur représentant le contenu numérisé du document dont la référence est sélectionnée par l'utilisateur vers un télécopieur indiqué par l'utilisateur et identifié par le centre serveur, et
- imprimer sur le télécopieur le document sélectionné par l'utilisateur.

2. Procédé selon la revendication 1, caractérisé en ce que l'on équipe le télécopieur de réception (20) d'un module décodeur (21) et que le centre serveur envoie un signal binaire codé au télécopieur.

3. Procédé selon la revendication 2, caractérisé en ce que le centre serveur envoie d'abord un signal de reconnaissance de la présence du module décodeur (21) sur la ligne du télécopieur indiqué (20) avant d'envoyer le signal binaire avec ou sans codage.

4. Procédé selon la revendication 2 ou 3, caractérisé en ce que l'utilisateur déclenche la phase d'obtention de copies de documents stockés au moyen d'un téléphone (17) en dialoguant avec une unité de messagerie vocale du centre serveur (1).

5. Procédé selon la revendication 1, caractérisé en ce que l'on déclenche la phase d'obtention de copie d'un document stocké par une unité de transmission (2) dont la communication avec le centre serveur (1) est crypté, l'unité de transmission pouvant recevoir et imprimer le document sélectionné par l'utilisateur.

6. Procédé selon la revendication 2 ou 3, caractérisé en ce que le cryptage du signal entre l'unité de transmission (2) du centre serveur d'une part et le codage du signal entre le centre serveur et le télécopieur indiqué (20) d'autre part sont différents l'un de l'autre.

7. Système de stockage et d'obtention de copies de documents à distance pour la mise en oeuvre du procédé selon l'une des revendications précédentes, caractérisé en ce qu'il comprend un centre serveur (1) équipé de moyens de cryptage et de décryptage, une pluralité de coffres de transmission (2) également équipés de modules de cryptage et décryptage (15), chaque coffre de transmission comprenant un boîtier sensiblement parallélépipédique enfermant un module principal (9), un module de paiement (10), un module d'acquisition et d'impression (11), un mécanisme d'entraînement mécanique et de numérisation des documents, la face avant du boîtier présentant une fente (5) pour l'introduction et le retrait des documents (6), une fente secondaire (8) pour l'introduction d'une carte de paiement, un clavier (7b) et un écran de visualisation (7a).

8. Système selon la revendication 7, caractérisé en ce que le module de paiement (10) de chaque coffre de transmission (2) permet au module principal (9) de déclencher les opérations de numérisation ou de réception de documents seulement après identification de l'utilisateur.
